# EUROPEAN PATENT SPECIFICATION

(11) **EP 1 788 343 B1**
(45) Date of publication and mention of the grant of the patent: **17.03.2010**
(21) Application number: 06019605.2
(22) Date of filing: 19.09.2006
(51) Int. Cl.: G01B 3/10

(54) **A tape measure**
Bandmass
Mètre ruban

(30) Priority: 17.11.2005 JP 2005332507
(43) Date of publication of application: 23.05.2007
(73) Proprietor: Haradoki Kabushiki Kaisha, Odawara-shi Kanagawa-ken (JP)
(72) Inventor: Hara, Terutake, Odawara-shi Kanagawa-ken (JP)
(74) Representative: Hering, Hartmut

(56) References cited:
- US-A- 3 812 588
- US-B1- 6 491 248
- US-B1- 6 595 451

## Description

### BACKGROUND OF THE INVENTION

### 1. Field of the Invention

The present invention relates to a measuring tape having a braking mechanism of a self-locking type in which a pulled out tape automatically stops at a position where it is.

### 2. Description of Related Art

A lot of conventional braking systems for a tape used in the measuring tape are types in which a braking operation is performed after pulling out the tape from a housing in order to stop the tape at the position as it is. Among those, there is a self-locking type braking system in which the tape automatically stops at the position where the tape is pulled out from the housing. Examples of the above stated type of the braking system include a system in which a rotation drum which is pressurized in a direction winding up the tape is applied with a brake in order to stop the tape, and a system in which a stopper is inserted between a surface of the tape coming out of the rotation drum and a surface of the tape winded around the rotation drum in order to stop the tape. The latter stopper-inserting type system is a publicly known method as well as a door lock type method which is used here for the measuring tape as a stopper mechanism for the tape.

Further braking systems for a tape are disclosed in US 6 491 248, US 6 595 451 and US 3 812 588.

However, the system in which the rotation drum is applied with a brake is inferior in keeping a halt condition of the tape and therefore it could have happened that the tape moves in a winding direction while doing a measuring task. Further, the system in which the stopper is inserted between the surface of the tape coming out of the rotation drum and the surface of the tape winded around the rotation drum in order to apply the brake is excellent in keeping the halt condition of the tape, whereas it could have happened that an impact given to a hand is remarkably strong when the tape stops if a person attempts to stop the tape while he/she is winding up the pulled out tape. Still further, since the stopper is inserted with a strong pressuring force, there use to be a strong resistant force when pulling out the tape.

Therefore, the present invention was made in view of the above stated problems. The present invention is directed to provide a measuring tape with the self-locking type braking system capable of reducing the impact upon stopping the tape while winding up the pulled out tape, excellent in keeping the halt condition of the tape and capable of reducing the resistant force upon pulling out the tape.

### SUMMARY OF THE INVENTION

The invention is defined by the features of Claim 1.

According to an aspect of the present invention, the measuring tape is featured in including a brake operation means capable of operating the brake of the tape arranged on the measuring tape at least from an outside of the housing, a braking means for applying a brake to the tape connected to the brake operation means and a pressuring means for continuously pressuring the braking means in a braking direction, in which a braking condition is released by an operation of the brake operation means, the braking means is formed into a roller shape made of a predetermined material supported in a rotational manner in a to-and-fro direction of the tape, and the roller is wedged between the surface of the tape coming out of the rotation drum and a predetermined member in order to apply the brake to the tape.

The measuring tape of the present invention is hereinafter explained into detail. The housing is a member for containing the tape for measurement, namely, a body of the measuring tape. The housing is made of a resin material formed into a desired shape, a shaft is vertically arranged on a side wall in the housing, and the rotation drum around which the tape for measurement with memories printed thereon is winded is supported by the shaft. Further, the rotation drum is provided inside thereof with a coil-like winding spring for winding up the tape, and the tape is pressurized in a tape winding direction.

A typical housing is molded in one piece using a resin material excellent in molding; however, there is a housing formed of the other material such as metal material.

At the front upper section of the housing, the brake operation means or an operation member, for example, a button, lever or the like are arranged for the sake of operation from the outside of the housing. The housing is provided with the braking means for applying the brake to the tape upon being connected to the brake operation means, in which the connection between the brake operation means and the braking means is established indirectly through a predetermined arm or the like, or established directly by features of the brake operation means and/or the braking means. In order to apply the brake continuously to the tape, the housing is provided with the pressuring means for continuously pressurizing the braking means in the braking direction. More specifically, the pressuring means serves to establish a constant contact between the braking means and the tape, and the pressuring can be done through any method. For example, the pressuring can be done through a recovering action from a flex or a deformation of an entire or a portion of a member composing the braking means, or done by a predetermined pressuring means such as a spring or a member having a spring-like function. The pressuring can also be done by an arbitrary arm for connecting the brake operation means with the braking means or the brake operation means.

According to the brake of the present embodiment, the brake is released by operating the brake operation means. In other words, since the tape is always applied with the brake, the tape automatically stops at the position where the tape was pulled out, whereas, upon winding up the tape, the brake operation means is operated to release the brake.

The tape incomes and outgoes through a tape outlet provided at a front lower section of the housing, and an end tab provided at an end of the tape locks at the tape outlet upon completion of the winding up of the tape, thereby preventing the tape from being pulled into the housing.

A typical tape outlet is provided with a shock absorbing member for reducing (including an absorbing effect) an impact energy of the end tab, a structure of the shock absorbing member being constructed suitably in accordance with a shape of the housing and a speed of winding the tape. For example, the shock absorbing member is provided below the tape, or above the tape by passing the tape through a through-hole of the shock absorbing member.

The braking means has a roller-like shape, made of a predetermined material and supported rotationally in the to-and-fro direction of the tape, in which the roller is wedged between the surface of the tape coming out of the rotational drum and the predetermined member to apply the brake to the tape. Here, "wedge" means that the roller is inserted between the surface of the tape coming out of the rotation drum and the predetermined member in an engaging manner. Upon wedging of the braking means, a measure for preventing the tape from escaping is taken by a structure of the housing and an arrangement of a supporting means, which will be explained later. Also, the predetermined member is formed into such a shape that the braking means can be wedged thereon.

The predetermined material of the roller may not be limited to a resilient (soft) material but can be a hard material in accordance with the supporting means which prevents the tape from escaping and which is provided behind the tape, which will be explained later. Namely, in the case where a contact section of the supporting means with the tape is made of a material suitable for applying the brake, it is not necessary for the roller to have a direct braking function.

The roller may be formed into any shape, for example, can be formed into a dram-like shape having a surface (a circumferential surface of the roller) of the same diameter as the surface contacting the tape surface if a width of the roller is made remarkably narrower than a width of the tape. Alternatively, if the width of the roller is made generally equal to the width of the tape, it is preferred that the surface (the circumferential surface of the roller) contacting the tape surface is made to have generally the same curvature as a curve of the tape surface. Further, the circumferential surface of the roller may be provided with any one of the predetermined shapes of projections or projecting strips, grooves or concave portions, or any combination thereof. For example, the projections and the concave portions may be formed into circle shapes, circular conical shapes, block shapes and the like, and the projecting strips and the grooves may be formed into straight line shapes, curved line shapes, zigzag shapes and the like in any direction such as a roller rotation direction, a rotation axis direction or a rotation direction at any angle. As a matter of course, any alternative shapes other than the above may be applicable as far as such shapes will contribute to an effective brake.

A material of the roller is not limited to as far as such material would contribute to the effective brake. For example, the roller may be formed of a material such as silicon, resin or the like having an elastic force or resilience. Alternatively, the roller may be formed of a material which comes to have the elastic force or resilience such as felt as a result of forming the roller. As a matter of course, the roller may be formed of any material as far as such material will contribute to the effective braking.

A wedging portion of the roller will exist between the surface of the tape coming out of the rotation drum and the predetermined material, more specifically, the member corresponds to the surface of the tape winded around the rotation drum. That is, the ,roller contacts both of the surface of the tape coming out of the rotation drum and the surface of the tape winded around the rotation drum, and is sandwiched between a space thereof in a wedging manner. Alternatively, there is a locking member provided on the housing, the locking member being provided so as to have a space where the roller can be wedged above the surface of the tape coming out of the rotation drum and between the tape surface and the locking member. Then, the locking member is provided in such a manner that a gap between the locking member and the tape becomes narrower in the direction the tape is winded. Further, a surface of the locking member where the roller contacts may be formed into a plain surface, or the surface may be formed into a curved surface which concaves toward the interior. The surface, of course, may be a curved surface which projects toward the exterior, and a shape of a roller contacting surface is selectable depending of the braking feelings in combination with the shape of the measuring tape.

Still further, the roller contacting surface may be provided with any one of the projections, the projecting strips, the grooves or the concaved portions, or any combination thereof. For example, the projections and the concaved portions may be formed into the circular shapes, the circular conic shapes, the block shapes, or the like and the projecting strips or the grooves may be formed into the straight line shapes, the curved line shapes, zigzag lines or the like in the rotation direction of the roller or a direction vertical to the rotation direction at predetermined angles. As a matter of course, as far as effective for the brake, any shapes other than the stated above can be applicable.

The locking member may be formed so as to be able to snap in a direction generally toward the tape surface, namely, when the brake of the roller is once released and thereafter the roller is locked between the tape surface and the locking member again to apply the brake, the impact upon applying the brake is reduced. More specifically, the entire body or a portion of the locking member may be formed so as to be capable of snap moving in the direction generally toward the tape surface, or alternatively, may be formed so as to be rotatable around one end of the locking member. Further, the locking member may be formed in such a manner the snap will be achieved by the flexibility or the deformation of the locking member, or the characteristics of the materials.

Further, alternatively, the locking member is formed so as to be rotatable until the locking member contacts a circumferential edge of the rotation drum to allow the brake by the wedging of the roller to be also effective on the rotation drum.

In order to prevent the tape from escaping upon applying the brake or when the roller is wedged, the tape is arranged in such a manner passing through close to the inner wall of the housing, or the inner wall of the housing is formed to have a bump in the case where the tape passes through away from the inner wall of the housing, or further alternatively, a dedicated supporting means may be formed in order to prevent the tape from escaping, in which, however, the supporting means is to be provided behind the tape at a position where the tape contacts the roller.

The shapes and the materials of the supporting member are not limited to, but if the braking function is mainly performed by the above stated roller, the supporting means may merely serves to support the tape, whereas if the braking function is not performed directly by the above stated roller, the supporting means may be provided with such a shape that the tape is applied with the brake when the tape contacts the supporting means, for example, the supporting means may be provided with any one of the above stated projections or projecting strips, grooves or concave portions or any combination thereof. Any material may be applicable for the supporting means as far as it can apply the brake to the tape when the tape contacts the supporting means. Alternatively, such a material may be applicable that the brake is applied to the tape when the tape contacts a portion of the supporting means at least where the tape contacts. As a matter of course, as far as such supporting means produces the effective brake, any shapes or materials other than the above may be applicable.

The supporting means may be formed so as to be able to snap in the direction generally toward the tape surface as stated above, or may be formed such that the entire or a portion of the supporting means or the supporting member is capable of snap moving in the direction generally toward the tape surface, or further alternatively, the supporting means may be formed so as to be rotatable around the one end thereof. Further, the supporting member may be so formed that the snapping can be achieved by the flexibility or the deformation of the supporting member or the material of the supporting member.

It is a matter of course that the roller and the supporting means can be configured such that each of them can perform the braking function in a relationship between the roller and the supporting means.

In the above stated explanation, the braking means has a roller-like shape; however, if the locking member contacts the snap or the circumferential edge of the rotation drum, or if the above stated supporting means is formed so as to snap in the direction toward the tape surface, the braking means may be a wedging member which can be wedged in a normal manner. The wedging member, for example, is a desirable wedge-shaped member suitable for wedging a circular conic including an oval or a pyramid or the like having the arbitrary number of corners. As a matter of course, any shape is applicable as far as it is capable of being wedged, namely, the shape of the wedging member is not limited.

That is, the measuring tape according to the present invention is featured in having the brake for applying the brake to the tape which includes the brake operation means operable at least from the outside of the housing, the braking means for applying the brake to the tape connected to the brake operation means and the pressuring means for continuously pressurizing the braking means in the braking direction, in which the brake is released through an operation of the brake operation means, the braking means is the wedging member of a wedgeable shape, the wedging member wedges between the surface of the tape coming out of the rotation drum and the predetermined member to apply the brake to the tape, and the predetermined member is formed so as to snap upon wedging the wedging member. The predetermined members on which the wedging member is wedged, the structure of the dedicated supporting member or the like for the sake of preventing the tape from escaping, the supporting member provided at the portion where the wedging member contacts and behind the tape, and the materials to be used corresponds to what are explained above.

Therefore, according to the measuring tape according to the present invention having the above stated structure, the tape will stay at a position where it is even when the tape is pulled out from the housing for a predetermined length followed by unhanding the tape. Further, since the braking means has a roller shape upon pulling out the tape, the roller is rotated upon contacting the tape, resulting in reducing the resistance caused by the tape being pulled out from the housing. Still further, when the pulling out of the tape stops, the roller is quickly wedged on the predetermined portion by the pressuring means to stop winding up the tape.

When retrieving or winding up the tape into the housing, the brake operation means is operated to forcibly release the wedging of the roller, and thereby the tape is winded up into the housing by the pressuring means arranged in the rotation drum, namely is winded around the rotation drum. Further, when the brake is applied while the tape is winded up, the elastic act caused by the roller or the member, i.e., the locking member, on which the roller is locked or wedged or the supporting means, i.e., the supporting member, for the tape, or any predetermined combination thereof will contribute to gradually apply the brake to the tape within a significantly short time period. The present measuring tape as stated above includes the braking member formed into the roller shape and therefore the braking members such as the roller or the like involved in giving the brake to the tape can produce an appropriate damper absorbing effect. As such, the impact upon stopping the tape while the pulled out tape is winded can be reduced. Further, for the wedging member serving as the braking member, an association member for the brake can produce a proper damper absorbing effect, such that, alike the braking member of the roller shape, the impact upon stopping the tape while the pulled out tape is winded can also be reduced. Consequently, the measuring tape according to the present invention is featured in that the impact upon applying the brake to the tape can be reduced and uncomfortableness upon applying the brake to the tape can also be reduced.

In view of the above, a pulling resistance upon pulling out the tape can be reduced, thereby enabling the pulling out of the tape in a smooth manner. Further, uncomfortable sound such as a sliding sound between the braking member and the tape upon pulling out the tape can be minimized.

As a matter of course, the braking condition of the tape is given by wedging, such that the measuring tape according to the present invention is excellent in keeping the halting condition of the tape.

### BRIEF DESCRIPTION OF THE DRAWINGS

Fig. 1 illustrates a side view, removing a half of a housing of the measuring tape according to the present invention.
Figs. 2A and 2B illustrate partially enlarged views of an inside of the housing showing a braking mechanism.
Fig. 3 illustrates a front view of a tape outlet.
Fig. 4 illustrates a front view of the tape outlet.
Figs. 5A and 5B illustrate a shape of circumferential surface of a brake roller.
Figs. 6A and 6B illustrate the shape of circumferential surface of the brake roller.
Figs. 7A and 7B illustrate the shape of circumferential surface of the brake roller.
Figs. 8A and 8B illustrate cross sectional views showing a supporting system of the brake roller.
Figs. 9A and 9B illustrate cross sectional views showing a supporting system of the brake roller.
Figs. 10A and 10B illustrate partially enlarged views of the inside of the housing showing a locking member having other shapes.
Fig. 11 illustrates a perspective view showing a shape of a locking surface of a locking member.
Fig. 12 illustrates a perspective view showing a shape of a locking surface of a locking member.
Fig. 13A and 13B illustrate partially enlarged views of the inside of the housing showing the locking member having other shapes.
Fig. 14 illustrates a partially enlarged view of the inside of the housing showing a shape of a supporting member.
Fig. 15 illustrates a partially enlarged view of the inside of the housing showing a shape of a supporting member.
Fig. 16 illustrates a perspective view showing a shape of the locking surface of the supporting member.
Fig. 17 illustrates a perspective view showing a shape of the locking surface of the supporting member.
Figs. 18A and 18B illustrate partially enlarged views of the inside of the housing showing the braking mechanism of the other type.
Figs. 19A and 19B illustrate partially enlarged views of the inside of the housing showing the braking mechanism of the other type.
Figs. 20A and 20B illustrate partially enlarged views of the inside of the housing showing the braking mechanism of the other type.
Fig. 21 illustrates a side view removing the half of the housing of the measuring tape with the damper.

### DESCRIPTION OF THE PREFERRED EMBODIMENTS

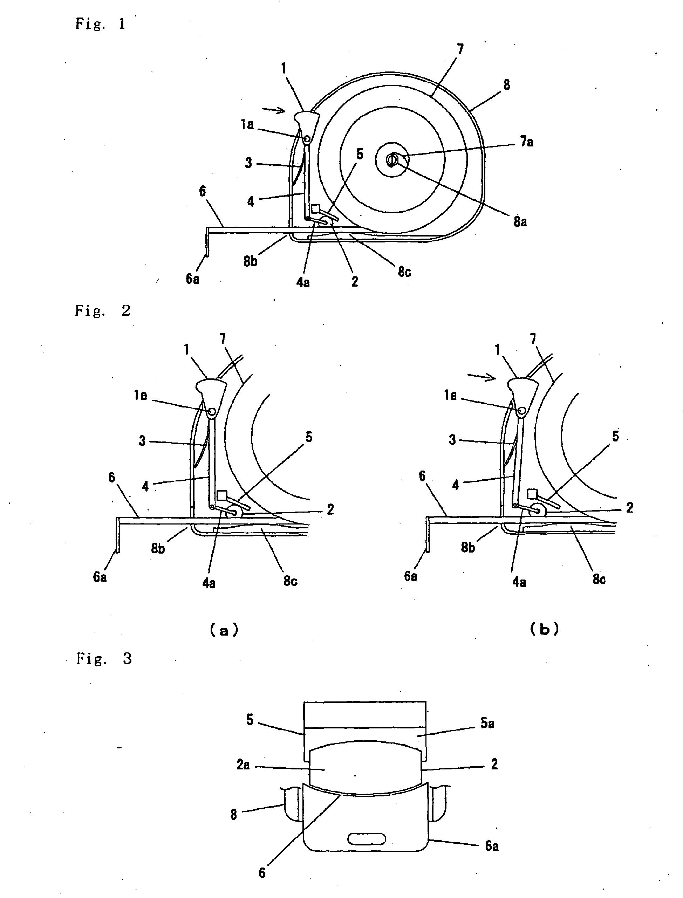

The measuring tape according to the present invention will be explained hereinafter, referring to the attached drawings. Fig. 1 shows a side view under a condition that a half of the housing of the measuring tape according to the present invention is removed, in which 1 denotes a brake operation button to be operated upon releasing the braking condition; 1a denotes the shaft for the brake operation button; 2 denotes the brake roller for applying the brake to the tape; and 3 denotes a leaf spring for pressing or pushing the brake roller 2 in the braking direction, respectively. The brake roller 2 is connected to the brake operation button 1 through a rod 4 and an arm 4a. The brake roller 2 is released from the braking condition when the brake operation button 1 is pushed in an arrow direction.

5 denotes the locking member on which the brake roller is locked; 6 denotes the tape; 6a denotes the end tab; 7 denotes the rotation dram around which the tape is winded; 7a denotes a coil spring which is arranged in the rotation drum 7 in order to press the rotation drum 7 in the direction the tape 6 is winded; 8 denotes he housing of the measuring tape; 8a denotes a support shaft for the rotation drum 7 provided within the housing; 8b denotes the tape outlet; and 8c denotes the supporting portion formed in a housing 8 where the tape 6 is supported upon being applied with the brake.

Figs. 2A and 2B show partially enlarged views of the inside of the housing, illustrating a braking mechanism. Fig. 2A illustrates a condition that the brake is applied to the tape and Fig. 2B illustrates a condition that the braking condition is released.

Fig. 2A illustrates a normal condition of the braking mechanism, in which the brake roller 2 is pressurized by the leaf spring 3, thereby being locked between the locking member 5 and a first surface of the tape 6, namely, on a surface including a normal scale, coming out of the rotation drum 7 in a wedging manner. Further, the supporting portion 8c contributes to prevent the tape 6 from escaping (in a lower direction in Fig. 2A) from the locking condition by the brake roller 2. In the braking condition, the brake roller 2 is locked between the locking member 5 and the first surface of the tape 6 more strongly due to movement of the tape 6 in the winding direction because the rotation drum 7 pressurizes thereon, resulting in preventing the tape 6 from being winded and the stopping of the tape.

Fig. 2B illustrates a condition that the brake operation button 1 is operated or pushed in an arrow direction to release the braking condition of the tape, namely, upon the brake,operation button 1 being pushed, the rod 4 supported by the brake operation button 1 allows the shaft 1a to move in a direction opposing to the brake operation button 1, i.e., a direction opposing to the arrow, and therefore, the arm 4a and the brake roller 2 supported by the arm 4a move in association with the movement of the shaft 1a. As such, a locking condition between the locking member 5 of the brake roller 2 and the first surface of the tape 6 loosens, and therefore the pressuring force of the rotation drum 7 exceeds the braking force of the brake roller 2 to allow the tape 6 to be winded up around the rotation drum 7, resulting in being housed within the housing 8.

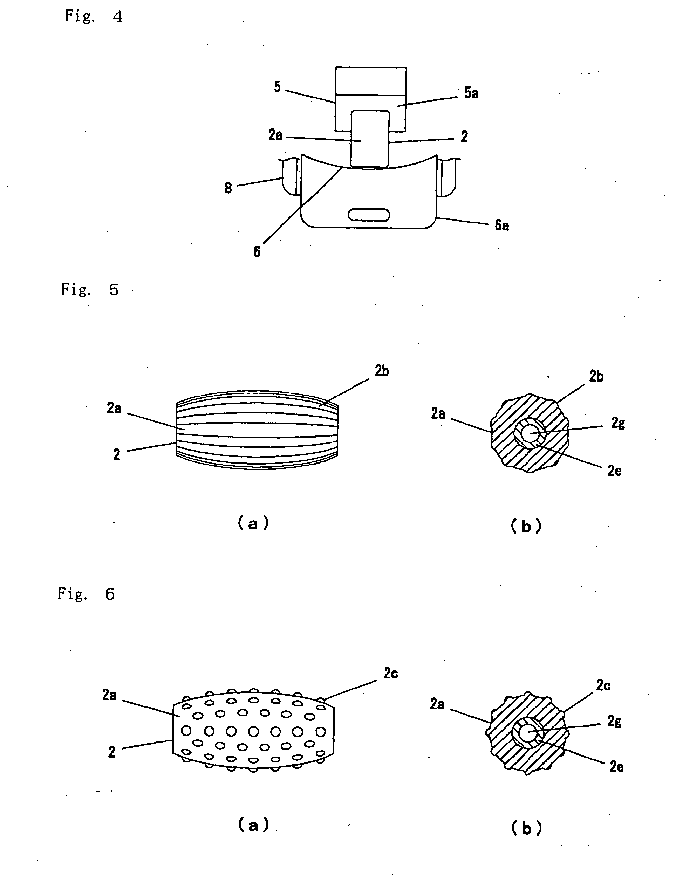

Figs. 3 and 4 illustrate front views of the outlet of the tape, respectively. Fig. 3 illustrates the brake roller 2 formed into a barrel shaped roller and Fig. 4 illustrates the brake roller 2 formed into a cylindrical shaped roller, respectively. The rollers having the above stated shapes may be selected in accordance with a presence or an absence of a curve of the tape in a horizontal direction, a width of the tape, a thickness of the tape or the like. As a matter of course, any shape is applicable other then the above as far as such shape can apply the brake to the tape.

2 denotes the brake roller, 2a denotes a circumferential surface for locking a locking surface 5a of the locking member 5 of the brake roller 2 with the first surface of the tape 6, i.e., the surface including the normal scale; 5 denotes the locking member; 5a denotes the locking surface on which the brake roller 2 of the locking member 5 is locked; 6 denotes the tape; 6a denotes the end tab provided on the end of the tape 6; and 8 denotes the housing.

Figs. 5 to 7 illustrate the circumferential shapes of the brake roller, respectively. Figs. 5A, 6A and 7A illustrate front views of the brake roller 2, respectively. Figs. 5B, 6B and 7B illustrate cross sectional views of the brake roller 2, respectively. An explanation will be made referring to the brake roller 2 having the barrel shape. 2e denotes a core; and 2g denotes a through-hole through which the arm 4a passes.

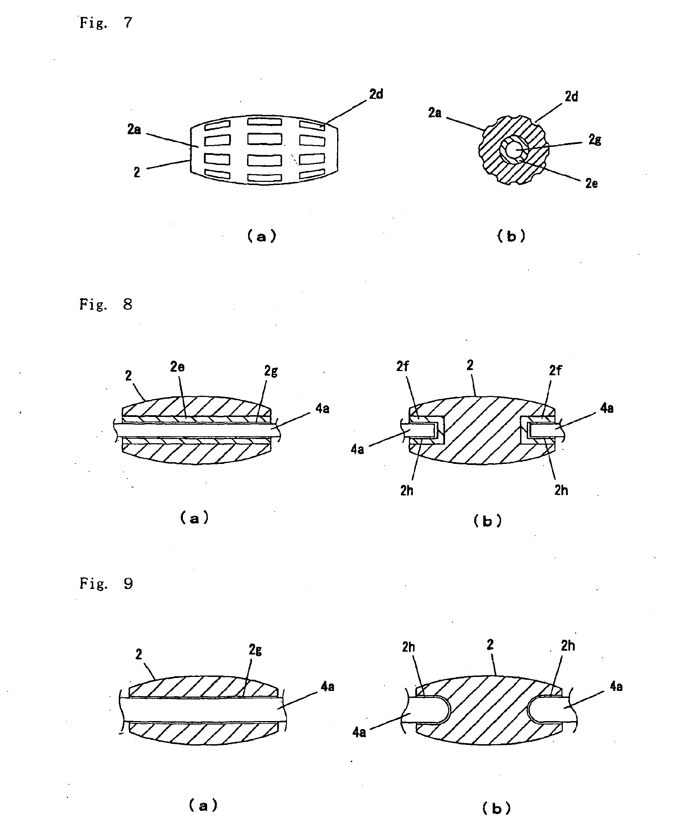

Fig. 5 illustrates the brake roller having the circumferential surface 2a formed with the projecting strips 2b. Fig. 6 illustrates the brake roller having the circumferential surface 2a formed with the projections 2c. Fig. 7 illustrates the brake roller having the circumferential surface 2a formed with the grooves 2d.

Figs. 8 and 9 illustrate cross sectional views of supporting conditions of the brake roller, respectively. Figs. 8A and 9A illustrate the brake roller 2 supported in such a manner that the through-hole 2g is formed on the brake roller 2 to receive the arm 4a therein to support the brake roller. Fig. 8B and 9B illustrate the brake roller 2 supported in such a manner that concave portions 2h are formed on the brake roller 2 to receive free ends of the arms 4a inserted correspondingly in an engaging manner, thereby supporting the brake roller. Fig. 8A illustrates the brake roller 2 in which the through-hole 2g is reinforced with the core 2e to allow the arm 4a to pass theretrough. Fig. 8B illustrates the brake roller 2 in which the concave portions 2h are reinforced with receiving materials 2f, respectively, to allow the free ends of the arms 4a to be engaged therein.

Fig. 9A illustrates the brake roller 2 in which the arm 4a directly passes through the through-hole 2g. Fig. 9B illustrates the brake roller 2 in which the concave portions 2h directly receive free ends of arms 4a correspondingly in an engaging manner.

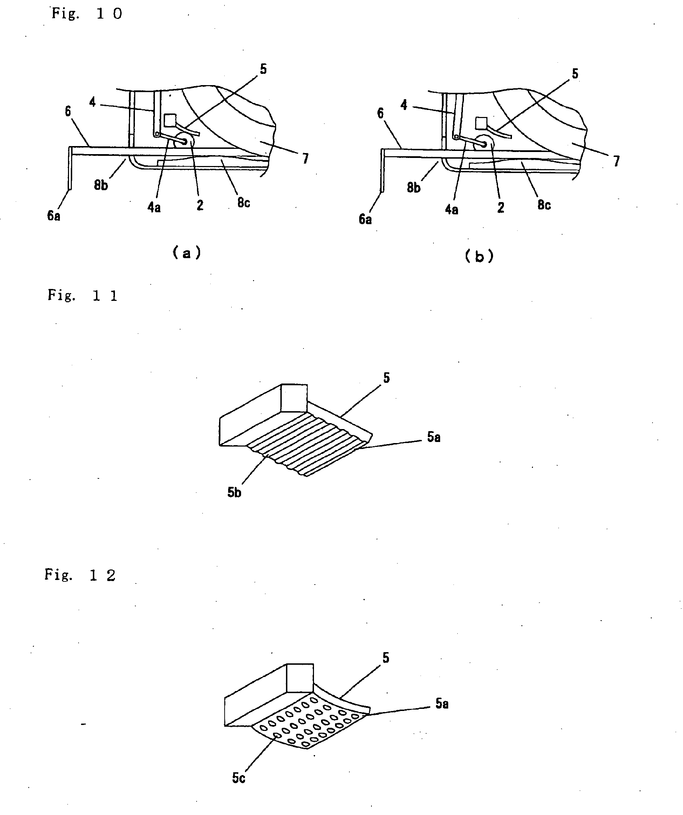

Fig. 10 is a partially enlarged view of the inside of the housing illustrating the locking member having a shape other than the above. The locking member of Fig. 10 includes the locking surface 5a of the locking member 5 having a curved surface projecting in a direction of the tape 6. With such a curved shape, when the brake roller 2 contacts a largely inclined curved portion (relatively closer to the tape outlet 8b of the locking surface 5a) of the locking surface 5a having a large gap of an angle between the brake roller 2 and the tape surface, the brake roller quickly moves in the direction of the tape 6 to contact the surface of the tape 6, then moves to a small inclined curved portion of the locking surface 5a (relatively closer to the rotation drum 7 of the locking surface 5a), and interlocks the locking surface 5a with the surface of the tape 6 stronger owing to the shape of this portion. The curved shape of the locking surface 5a may be formed at a desired curvature considering a feeling upon applying the brake. Fig. 10A illustrates a condition that the brake is applied to the tape and Fig. 10B illustrates a condition that the brake is released therefrom.

Figs. 11 and 12 illustrate perspective views showing shapes of locking surfaces of the locking member. Fig. 11 illustrates the locking surface 5a of the locking member 5 which linearly inclines and in which the locking surface is formed with projecting strips 5b. Fig. 12 illustrates the locking surface 5a of the locking member 5 of the curved shape in which the locking surface is formed with the projections 5c.

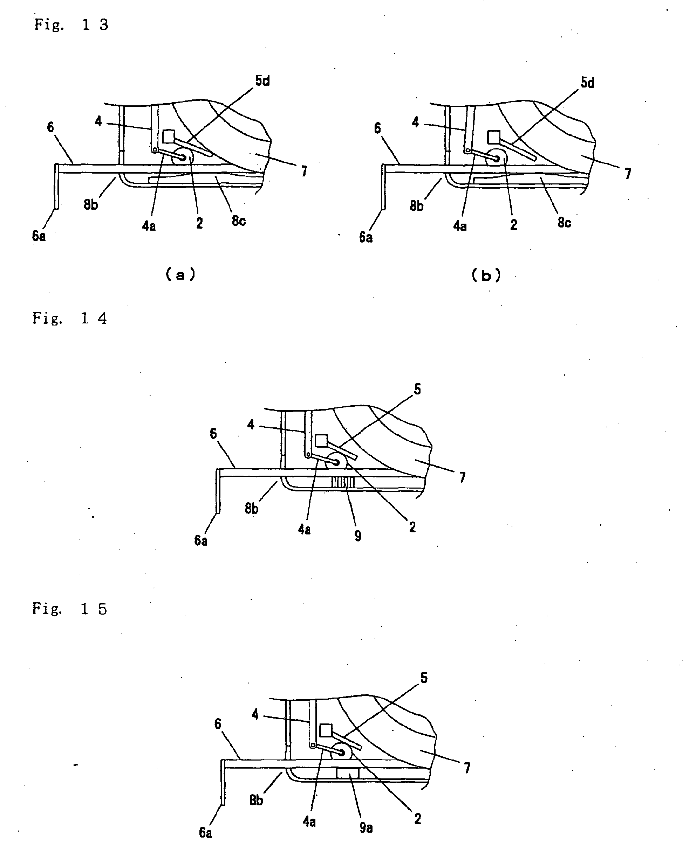

Fig. 13 illustrates a partially enlarged view showing the inside of the housing having a shape other than the above. According to the locking member of Fig. 13, at least a portion of the locking member 5 having the locking surface 5a contacts the circumferential edge of the rotation drum 7 in a forcible manner by a locking action of the brake roller 2 with the tape 6. In other words, if the brake roller 2 applies the brake to the tape, a first brake in which the locking surface 5a of the locking member 5 can be locked with the first surface of the tape 6 in the wedging manner can be produced, and a second brake in which the a predetermine portion of the locking member 5 pushed up by the brake roller 2 being locked pressure-contacts the circumferential edge of the rotation drum 7 can be produced as well. The locking member 5 may be formed into a mere rotatable member and may be formed into a snapping member. Fig. 13A illustrates a condition that the brake is applied to the tape and Fig. 13B illustrates a condition that the brake is released therefrom.

Figs. 14 and 15 illustrate partially enlarged views of the inside of the housing showing shapes of the supporting member. Here, 9 corresponds to the supporting portion 8c. This supporting member 9, alike the supporting portion 8c in Fig. 1, is provided in order to prevent the tape 6 from escaping when the brake roller 2 applies the brake to the tape. The present supporting member 9 is formed for the sake of a dedicated use.

Fig. 14 illustrates the supporting member 9 having a comb shape. Each tooth of this comb shaped portion is not limited to a specific hardness, but the hardness can be selected in such a manner that the comb shaped portion can perform the braking action upon contacting the tape 6. Further, a pitch between the teeth may be selected at a desired one. In the case where the tape 6 has the curved shape in the lateral direction, it is preferable to form the supporting member in accordance with the curve of such tape 6.

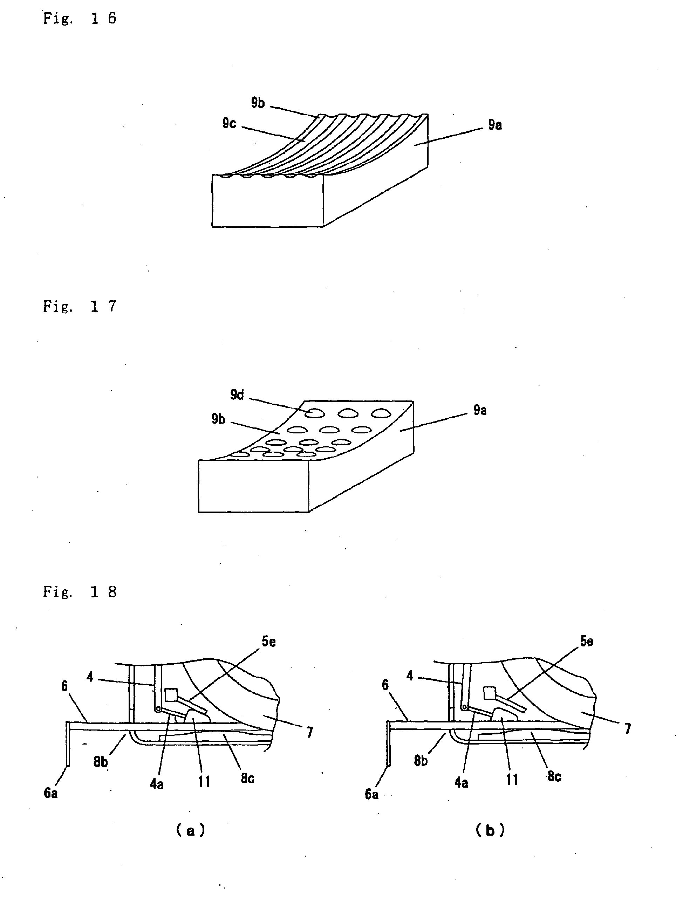

Fig. 15 illustrates the supporting member 9a having a plain surface which contacts the tape 6. Figs. 16 and 17 illustrate perspective views showing shapes of the locking surface of the supporting member. Fig. 16 illustrates a locking surface 9b of the supporting member 9a which curves in the lateral direction of the tape 6 in which the locking surface 9b is formed with grooves 9c.

Fig. 17 illustrates the licking surface 9b of the supporting member 9a which curves in the lateral direction of the tape 6 in which the locking surface 9b is formed with projections 9d.

Figs. 18 to 20 illustrate partially enlarged views of the inside of the housing showing the braking mechanism other than the above, in which the mechanism is capable of reducing the impact on the tape upon applying the brake as generally well as the braking member having the roller shape.

Fig. 18 illustrates the locking member capable of snapping when the braking member locks. With this snapping action, the impact upon locking the braking member can be reduced. 5e denotes a snap lock member; and 11 denotes a wedging member serving as the braking member. Fig. 18A illustrates a condition that the brake is applied to the tape and Fig. 18B illustrates a condition that the brake is released therefrom.

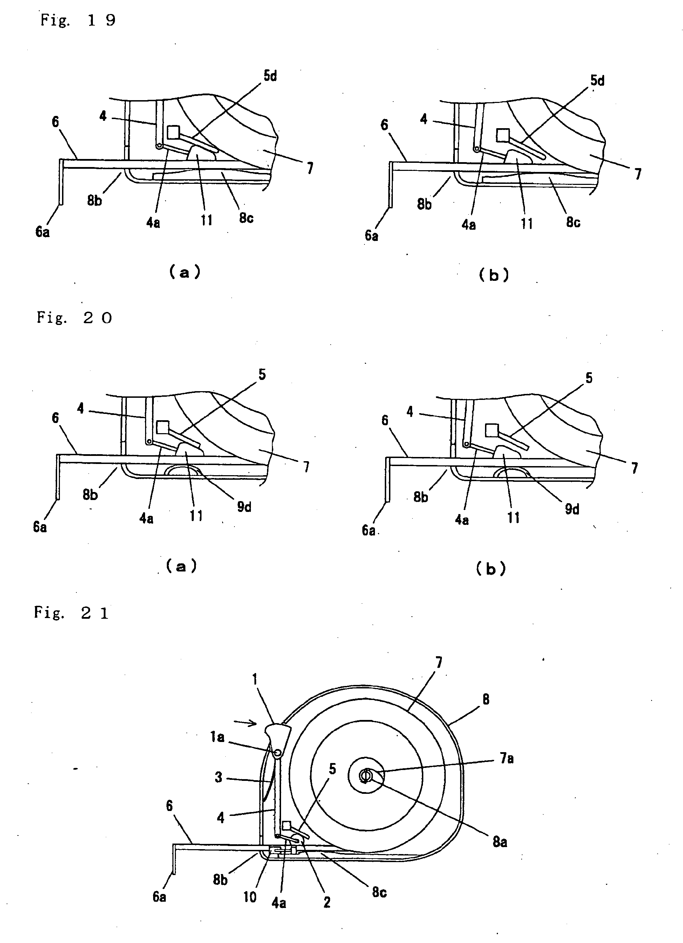

Figs. 19A and 19B illustrate conditions that the locking member contacts the circumstantial edge of the rotation drum 7 while snapping when the braking member locks, in which the snapping movement reduces the impact when the locking member locks. 5d denotes a movable locking member; and 11 denotes the wedging member serving as the braking member. Fig. 19A illustrates a condition that the brake is applied to the tape and Fig. 19B illustrates a condition that the brake is released therefrom.

Figs. 20A and 20B illustrate the supporting member which snaps when the braking member locks. According to this snapping action, the impact upon locking of the braking member is reduced. 9d denotes the supporting member which snaps; and 11 denotes the wedging member serving as the braking member. Fig. 20A illustrates a condition that the brake is applied to the tape and Fig. 20B illustrates a condition that the brake is released therefrom.

Fig. 21 illustrates a side view, removing a half of the housing of the measuring tape with a damper. Here, 1 denotes the brake operation button to be operated for releasing the braking condition from the tape; 1a denotes a shaft for the brake operation button 1; 2 denotes the brake roller for applying the brake to the tape; and 3 denotes the leaf spring for continuously pressurizing or pushing the brake roller 2 in the braking direction. The brake roller 2 is connected to the brake operation button 1 through the rod 4 and the arm 4a. Further, the brake roller 2 is released from the braking condition by pushing the brake operation button 1 in the arrow direction.

5 denotes the locking member on which the brake roller 2 locks; 6 denotes the tape; 6a denotes the end tub; 7 denotes the rotation drum around which the tape 6 is winded; 7a denotes the coil spring within the rotation drum 7 for pressurizing the rotation drum 7 in the direction the tape 6 is winded; 8 denotes the housing for the measuring tape; 8a denotes the supporting shaft of the rotation drum 7 provided in the housing; 8b denotes the tape outlet; and 8c denotes the supporting portion formed on the housing 8 in order to support the tape 6 upon being applied with the brake.

10 denotes a damper which serves to reduce or absorb an impact energy caused by the end tub at the end of the tape 6 upon winding up the tape 6. 6a in Fig. 21 is a mere example of the end tub. Any desirable end tub may be applicable in accordance with the shape of the tape 6.

## Claims

1. A measuring tape having a brake for a tape (6) comprising a brake operation means (1, 1 a) operable at least from an outside of a housing (8), a braking means (2) for applying a brake to a tape (6) to be connected to the brake operation means (1, 1a), and a pressurizing means (2) for continuously pressurizing the braking means (2) in a braking direction, wherein
the brake operation means (1, 1 a) is operated to release the braking condition;
the braking means (2) is formed into a shape of a roller which is supported rotatably in a to-and-fro running direction of the tape (6), has a horizontal rotation axis intersecting with the running direction and is formed of a predetermined material; and
the roller (2) is wedged between a surface of the tape (6) coming out of a rotation drum (7) and a locking member (5) provided on the housing (8) to apply the brake to the tape (6),
**characterized in that**:
the brake operation means (1, 1a), for releasing the braking condition, is adapted to be operated so as to move the horizontal rotation axis of the roller (2) in a direction opposing the braking direction

2. A measuring tape according to claim 1, **characterized in that** the locking member (5) is provided in such a manner that a gap between the locking member (5) and the tape (6) becomes narrower in a direction the tape (6) is wound.

3. A measuring tape according to claim 1 or 2, **characterized in that** the locking member (5) is formed so as to be rotatable until the locking member (5) contacts the circumferential edge of the rotation drum (7).

4. A measuring tape according to any of the preceding claims, **characterized in that** a surface, which contacts the tape surface, of the roller (2) has generally same the curvature as the curve of the tape surface.

5. A measuring tape according to any of the preceding claims, **characterized in that** a circumferential surface of the roller (2) is provided with any of a projection or a projecting strip, a groove or a concave portion, or any combinations thereof.

6. A measuring tape according to any of the preceding claims, **characterized in that** the roller (2) is made of a resilient material.

## Patentansprüche

1. Maßband mit einer Bremse für ein Band (6) mit einer Bremsbetätigungseinrichtung (1, 1a), die wenigstens von einer Außenseite eines Gehäuses (8) aus betätigbar ist, einer Bremseinrichtung (2) zum Anwenden einer Bremse auf ein Band (6), um mit der Bremsbetätigungseinrichtung (1, 1a) verbunden zu werden, und einer Druckbeaufschlagungseinrichtung (2) zum kontinuierlichen Beaufschlagen der Bremseinrichtung (2) mit Druck in einer Bremsrichtung, wobei
die Bremsbetätigungseinrichtung (1, 1a) betätigt wird, um den Bremszustand freizugeben;
die Bremseinrichtung (2) in eine Form einer Rolle ausgebildet ist, die in einer Vor- und Rücklaufrichtung des Bands (6) drehbar gelagert ist, eine horizontale Drehachse hat, die sich mit der Laufrichtung schneidet, und aus einem vorbestimmten Material ausgebildet ist; und
die Rolle (2) zwischen einer Oberfläche des aus einer Drehtrommel (7) herauskommenden Bands (6) und einem an dem Gehäuse (8) vorgesehenen Verriegelungselement (5) eingekeilt ist, um die Bremse auf das Band (6) anzuwenden,
**dadurch gekennzeichnet, dass:**
die Bremsbetätigungseinrichtung (1, 1a) zum Freigeben des Bremszustands dazu geeignet ist, derart betätigt zu werden, dass die horizontale Drehachse der Rolle (2) in einer Richtung entgegengesetzt zu der Bremsrichtung bewegt wird.

2. Maßband nach Anspruch 1, **dadurch gekennzeichnet, dass** das Verriegelungselement (5) auf derartige Weise vorgesehen ist, dass ein Spalt zwischen dem Verriegelungselement (5) und dem Band (6) in einer Richtung, in der das Band (6) gewickelt ist, schmaler wird.

3. Maßband nach Anspruch 1 oder 2, **dadurch gekennzeichnet, dass** das Verriegelungselement (5) derart ausgebildet ist, dass es drehbar ist, bis das Verriegelungselement (5) den Umfangsrand der Drehtrommel (7) kontaktiert.

4. Maßband nach einem der vorangehenden Ansprüche, **dadurch gekennzeichnet, dass** eine Oberfläche, die die Bandoberfläche kontaktiert, der Rolle (2) allgemein dieselbe Bogenlinie wie die Bogenlinie der Bandoberfläche hat.

5. Maßband nach einem der vorangehenden Ansprüche, **dadurch gekennzeichnet, dass** eine Umfangsoberfläche der Rolle (2) mit irgendetwas von einem Vorsprung oder einem vorstehenden Streifen, einer Nut oder einem konkaven Bereich oder irgendwelchen Kombinationen davon versehen ist.

6. Maßband nach einem der vorangehenden Ansprüche, **dadurch gekennzeichnet, dass** die Rolle (2) aus elastischem Material hergestellt ist.

## Revendications

1. Mètre à ruban possédant un frein pour un ruban (6), frein, qui comprend un moyen d'actionnement du frein (1, 1a) utilisable au moins depuis un côté externe du boîtier (8), un moyen de freinage (2) servant à appliquer un frein contre un ruban (6), moyen de freinage, qui est relié aux moyen d'actionnement du frein (1, 1a) et un moyen de maintien sous pression (2) servant à maintenir les moyen de freinage (2) continuellement sous pression dans une direction de freinage, dans lequel
le moyen d'actionnement du frein (1, 1a) est utilisé pour lever l'état de freinage,
le moyen de freinage (2) est conçu en forme d'un rouleau qui est supporté avec possibilité de rotation dans les directions de course va et vient du ruban (6), il présente un axe de rotation horizontal transversal à la direction de course et il est réalisé dans un matériau prédéterminé et
le rouleau (2) est calé entre une surface du ruban (6) sortant d'un tambour de rotation (7) et un élément de verrouillage (5) prévu sur le boîtier (8) et servant à appliquer le frein contre le ruban (6),
**caractérisé en ce que**
le moyen d'actionnement du frein (1, 1a) servant à lever l'état de freinage est approprié à être utilisé de façon à déplacer l'axe de rotation horizontal du rouleau (2) dans une direction opposée à la direction de freinage.

2. Mètre à ruban suivant la revendication 1, **caractérisé en ce que** l'élément de verrouillage (5) est prévu de manière qu'un vide entre l'élément de verrouillage (5) et le ruban (6) rétrécisse dans la direction d'enroulement du ruban (6).

3. Mètre ruban suivant la revendication 1 ou 2, **caractérisé en ce que** l'élément de verrouillage (5) est conçu avec possibilité de rotation jusqu'à ce que l'élément de verrouillage (5) entre en contact avec le bord circonférentiel du tambour de rotation (7).

4. Mètre à ruban suivant une quelconque des revendications précédentes, **caractérisé en ce qu'**une surface du rouleau (2), surface, qui est en contact avec la surface du ruban, présente généralement une courbure identique à celle de la surface du ruban.

5. Mètre ruban suivant une quelconque des revendications précédentes, **caractérisé en ce qu'**une surface circonférentielle du rouleau (2) est munie d'une saillie ou d'une bande saillante ou d'une rainure ou d'une partie concave ou de n'importe quelle combinaison de celles-ci.

6. Mètre à ruban suivant une quelconque des revendications précédentes, **caractérisé en ce que** le rouleau (2) est réalisé en un matériau élastique.
